# FASCICULE DE BREVET EUROPEEN

(11) **EP 3 306 167 B1**
(45) Date de publication et mention de la délivrance du brevet: **26.06.2019**
(21) Numéro de dépôt: 17194975.3
(22) Date de dépôt: 05.10.2017
(51) Int. Cl.: F16L 37/23, F16L 37/44, F16L 37/084, F16L 37/38

(54) **RACCORD RAPIDE**
SCHNELLVERBINDER
QUICK COUPLING

(30) Priorité: 06.10.2016 FR 1659651
(43) Date de publication de la demande: 11.04.2018
(73) Titulaire: Staubli Faverges, 74210 Faverges (FR)
(72) Inventeur: TIBERGHIEN, Alain-Christophe, 74230 SEVRIER (FR); DURIEUX, Christophe, 73200 GILLY SUR ISERE (FR); MICHEL, François, 73200 MERCURY (FR)
(74) Mandataire: Lavoix

(56) Documents cités:
- EP-A1- 0 100 090
- EP-A2- 0 184 799
- WO-A1-01/73335

## Description

L'invention concerne un raccord rapide pour le raccordement de canalisations de fluide.

Dans le domaine du sport automobile, les véhicules sont levés lors du changement de pneumatiques grâce à un réseau pneumatique de vérins de levage. Il est connu de US 5 765 810 d'apporter de l'air à quatre vérins pneumatiques permettant d'élever une voiture à partir d'un compresseur embarqué, en vue d'effectuer des réparations. Dans le contexte du sport automobile, le compresseur est installé sur un stand et à la suite d'un changement de pneumatique, il est important de dépressuriser la canalisation aval liée au circuit des vérins pneumatiques et de désaccoupler les éléments de raccord dans une manoeuvre unique très rapide. Cette fonction est actuellement réalisée en deux temps et nécessite plusieurs manoeuvres qui contraignent l'opérateur dans sa séquence de travail.

Il est connu d'utiliser un ensemble mécanique pour le raccordement des canalisations d'air entre un compresseur et le circuit de vérins pneumatiques de levage du véhicule. Cet ensemble assure une séquence d'accouplement pour réaliser de façon sécurisée l'alimentation en air du circuit aval à pressuriser.

Les systèmes existants prévoient un élément mâle équipé d'une bague mobile en translation autour d'une fiche reliée au circuit aval, qui peut obturer ou non le circuit aval, et un élément femelle qui est en communication avec le circuit amont, et équipé d'un système de verrouillage apte à se verrouiller sur la fiche de l'élément mâle. A l'accouplement, l'élément femelle repousse axialement la bague pour obturer le circuit aval, se verrouiller sur la fiche mâle, et apporter de l'air avant le désaccouplement.

Ce fonctionnement ne permet pas d'associer la purge automatique du circuit aval aux accouplements du raccord, l'opération de purge étant donc réalisée après désaccouplement des deux éléments de raccord, par l'avancement manuel de la bague dans sa position de purge.

Un raccord rapide est connu de WO 01/73335 ayant un passage de purge et une bague de purge étant capable d'obturer ledit passage de purge.

C'est à ces inconvénients qu'entend plus particulièrement remédier l'invention en proposant un nouveau raccord, dans lequel la manoeuvre de purge est permise de façon plus rapide et pratique que dans les systèmes connus.

A cet effet, l'invention concerne un raccord rapide pour la jonction étanche de canalisations de fluide, comportant un élément mâle adapté pour être relié à une première canalisation et un élément femelle adapté pour être relié à une deuxième canalisation, l'élément mâle comportant :
- un corps mâle pourvu d'un relief de verrouillage et définissant un canal interne en communication avec la première canalisation,
- une bague de purge de la première canalisation, entourant le corps mâle, et mobile entre une position arrière, dans laquelle la bague de purge obture un passage de purge du corps mâle, et une position avant, dans laquelle la bague de purge n'obture plus le passage de purge,
l'élément femelle comportant :
- un corps femelle définissant un canal interne en communication avec la deuxième canalisation,
- un porte-billes disposé à l'intérieur du corps femelle, formant un logement de réception du corps mâle et portant des billes de verrouillage du corps mâle, lesdites billes de verrouillage étant mobiles dans un logement entre une première position, dans laquelle elles sont aptes s'opposer au retrait du relief de verrouillage, et une deuxième position, dans laquelle les billes de verrouillage permettent le retrait du relief de verrouillage,
- un corps de soupape solidaire du porte-billes, mobile en translation dans le corps femelle entre une position avant, dans laquelle il obture le passage de fluide vers la deuxième canalisation et une position arrière, dans laquelle le passage vers la deuxième canalisation est ouvert, le corps de soupape comportant des billes d'attelage adaptées pour solidariser en translation le corps de soupape et le corps femelle,
- une bague interne disposée à l'intérieur du corps de soupape, adaptée, dans une position de retenue, pour maintenir le corps de soupape et le corps femelle attelés par les billes d'attelage lorsque l'élément femelle est désaccouplé de l'élément mâle.

Le raccord est caractérisé en ce que:
- dans une première configuration d'accouplement par rapprochement mutuel de l'élément mâle et de l'élément femelle, les billes de verrouillage ont franchi le relief de verrouillage de l'élément mâle,
- dans une deuxième configuration d'accouplement par rapprochement mutuel, la bague interne a atteint une position dans laquelle elle ne maintient plus le corps de soupape et le corps femelle attelés par les billes d'attelage,
- dans une troisième configuration d'accouplement par rapprochement mutuel, le corps femelle maintient les billes de verrouillage dans leur première position;
- dans une quatrième configuration d'accouplement par rapprochement mutuel, le corps de soupape a atteint une position qui autorise le passage de fluide entre les deux canalisations,
- l'élément femelle comporte des moyens de pilotage aptes à entrainer la bague de purge de sa position arrière vers sa position avant lors du désaccouplement des éléments mâle et femelle par éloignement mutuel.

Grâce à l'invention, l'accouplement de l'élément mâle dans l'élément femelle présente une séquence à plusieurs configurations, qui permettent, au désaccouplement, l'actionnement de la bague de purge par l'élément femelle avant le déverrouillage de l'élément mâle.

Grâce à l'invention, le choix de la désactivation des moyens de pilotage s'effectue en préparatif des opérations de levage, en temps masqué, de sorte que l'opérateur peut réaliser des gestes simples et concentrer ses efforts sur les opérations d'accouplement et de désaccouplement lors du levage du véhicule.

Selon des aspects avantageux mais non obligatoires de l'invention, un tel raccord peut incorporer une ou plusieurs des caractéristiques suivantes, prises selon toute combinaison techniquement admissible :
- Les moyens de pilotage sont sélectivement désactivables de telle sorte qu'ils n'entraînent pas la bague de purge lors du désaccouplement.
- L'élément femelle comprend une bague de sélection permettant la désactivation des moyens de pilotage, montée autour du corps femelle et mobile en rotation entre une première position, dans laquelle elle maintient les moyens de pilotage dans une position dans laquelle ils ne peuvent entraîner la bague de purge lors du désaccouplement des éléments mâle et femelle, et une seconde position, dans laquelle les moyens de pilotage sont aptes à entraîner la bague de purge de sa position arrière vers sa position avant lors du désaccouplement.
- Les moyens de pilotage sont des billes de pilotage logées dans le corps femelle et mobiles entre une première position, dans laquelle les billes de pilotage font saillie du corps femelle et interfèrent avec la bague de purge, et une seconde position, dans laquelle les billes de pilotage ne font pas saillie du corps femelle.
- L'élément femelle comporte des doigts de commande des billes de pilotage, mobiles entre une première position, dans laquelle les billes de pilotage sont écartées radialement vers leur première position, et une seconde position, dans laquelle les billes de pilotage sont alignées radialement avec une encoche des doigts de commande et sont libres d'atteindre leur seconde position.
- Les doigts de commande des billes de pilotage sont maintenus dans leur seconde position par le porte-bille à l'encontre d'un effort d'un ressort en première configuration et deuxième configurations d'accouplement, et sont maintenus dans leur première position par le corps femelle en troisième et quatrième configurations d'accouplement.
- Les moyens de pilotage sont des griffes mobiles entre une position déployée, dans laquelle elles font saillie du corps femelle et interfèrent avec la bague de purge, et une position rétractée, dans laquelle les griffes n'interfèrent pas avec la bague de purge.
- L'élément femelle comporte des billes de commande des griffes, mobiles entre une position basse, dans laquelle les griffes sont libres d'atteindre leur position rétractée de façon centripète, et une position haute, dans laquelle les billes de commande maintiennent les griffes dans leur position déployée.
- Les billes de commande prennent appui sur une rampe du porte-billes entre un diamètre inférieur correspondant à la position rétractée des griffes et un diamètre supérieur correspondant à la position déployée des griffes.
- A la quatrième configuration d'accouplement par rapprochement mutuel, la bague de purge est dans la position arrière dans laquelle la bague de purge obture le passage de purge du corps mâle.
- A la deuxième configuration d'accouplement par rapprochement mutuel, la bague interne a atteint une position dans laquelle elle s'attelle au corps de soupape par les billes d'attelage.
- La bague interne est rappelée vers sa position de retenue dans laquelle elle maintient attelés le corps de soupape et le corps femelle par l'action d'un ressort de rappel lors du désaccouplement.
- A la troisième configuration d'accouplement par rapprochement mutuel, les moyens de pilotage ont dépassé une collerette intérieure de la bague de purge.
- Les billes de verrouillage et les billes d'attelage sont identiques et portées par le porte-billes.
- L'élément femelle comporte une bille de commande et de pilotage prenant appui sur une rampe du porte-billes entre un diamètre supérieur pour lequel la bille fait saillie du corps femelle et interfère avec la collerette intérieure de la bague de purge, et un diamètre supérieur pour lequel la bille de pilotage et de commande ne fait pas saillie du corps femelle.

L'invention sera mieux comprise et d'autres avantages de celle-ci apparaitront plus clairement à la lumière de la description qui va suivre, faite à titre d'exemple non limitatif en référence aux dessins annexés dans lesquels :
- la figure 1 est une coupe longitudinale d'un élément mâle appartenant à un raccord conforme à l'invention ;
- la figure 2 est une coupe longitudinale d'un élément femelle appartenant à un raccord conforme à l'invention ;
- les figures 3, 4 et 5 sont des coupes longitudinales du raccord formé par l'élément mâle de la figure 1 et l'élément femelle de la figure 2, dans trois configurations successives d'accouplement ;
- la figure 6 est une coupe longitudinale du raccord des figures 3 à 5 en configuration accouplée ;
- la figure 7 est une coupe longitudinale du raccord des figures 3 à 6, dans une première étape de désaccouplement ;
- la figure 8 est une coupe longitudinale du raccord des figures 3 à 7, dans une seconde configuration de désaccouplement ;
- la figure 9 est une coupe longitudinale de l'élément femelle de la figure 2, dans un mode de fonctionnement alternatif ;
- la figure 10 est une coupe longitudinale du raccord des figures 3 à 8, correspondant à une phase de désaccouplement dans le mode de fonctionnement de la figure 9 ;
- la figure 11 est une vue en perspective, selon deux angles différents, d'un doigt de commande de l'élément femelle ;
- la figure 12 est une coupe longitudinale d'un raccord conforme à un second mode de réalisation de l'invention, en configuration désaccouplée ;
- la figure 13 est une coupe longitudinale du raccord de la figure 12, dans une configuration accouplée ;
- la figure 14 est une coupe longitudinale du raccord des figures 12 et 13, dans une configuration de désaccouplement ;
- la figure 15 est une coupe longitudinale d'une partie du raccord des figures 12 à 14, dans un mode de fonctionnement alternatif, l'élément mâle étant en butée contre l'élément femelle ;
- la figure 16 est une coupe analogue à la figure 15, le raccord étant dans son mode de fonctionnement des figures 12 à 14 ;
- la figure 17 est une coupe longitudinale d'un élément femelle appartenant à un raccord conforme à un troisième mode de réalisation de l'invention ;
- la figure 18 est une coupe longitudinale, en configuration accouplée, du raccord incorporant l'élément femelle de la figure 17.

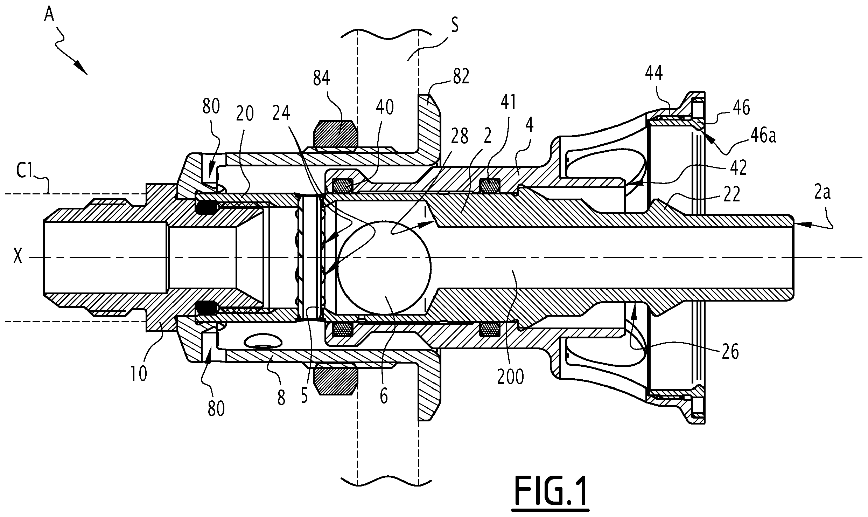

La figure 1 représente un élément mâle A. L'élément mâle A comprend un corps mâle 2 centré autour d'un axe longitudinal X. Le corps mâle 2 définit un canal interne 200 permettant le passage du fluide selon l'axe X. L'élément mâle A est adapté pour être relié à une première canalisation C1.

Dans la présente description, les objectifs « axial », « radial » et les adverbes « axialement » et « radialement » sont employés en référence à l'axe central X. Une surface radiale est une surface cylindrique entourant l'axe X, tandis qu'une surface axiale est une surface perpendiculaire à l'axe X.

On entend par attelage la fonction de solidarisation en translation de deux pièces mobiles en translation, avec des moyens d'attelage permettant cette solidarisation par coopération avec les deux pièces attelées et généralement avec une troisième pièce mobile agissant sur les moyens d'attelage pour maintenir cette solidarisation.

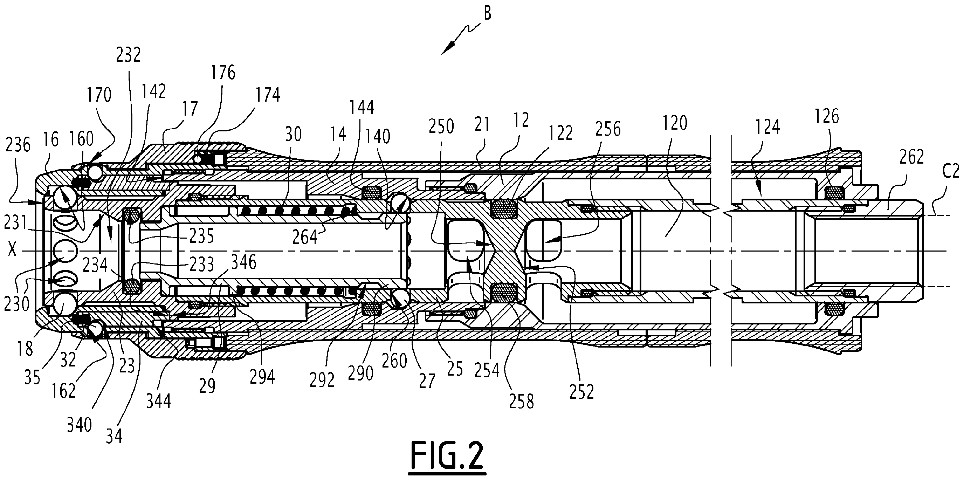

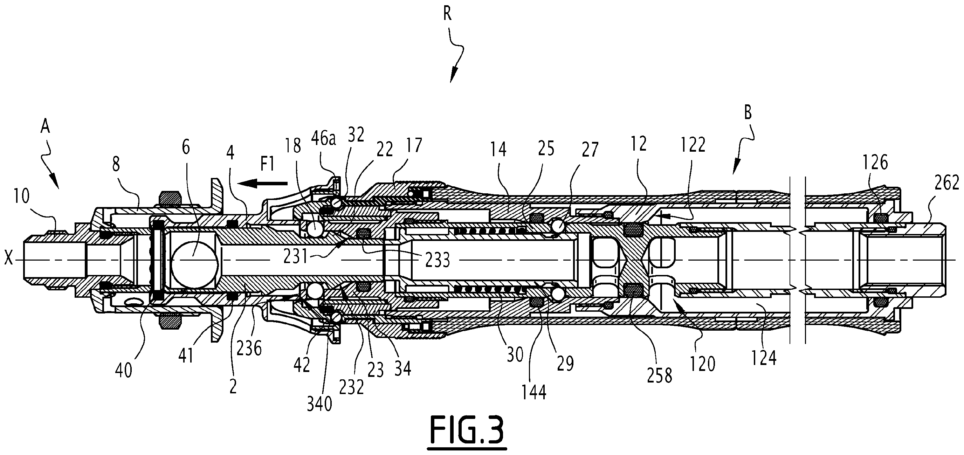

Le corps mâle 2 est destiné à être accouplé avec un élément femelle B, représenté à la figure 2, pour former un raccord R représenté à la figure 3.

Dans ce qui suit, pour l'élément mâle A et l'élément femelle B, le côté avant est celui qui est orienté respectivement du côté de l'élément femelle B ou du côté de l'élément mâle A, tandis que le côté arrière est celui qui est situé respectivement à l'opposé de l'élément femelle B ou de l'élément mâle A.

Une extrémité avant du corps mâle 2 est pourvue d'un relief de verrouillage formé par une collerette 22 adaptée pour être retenue dans l'élément femelle B lors de l'accouplement du raccord R.

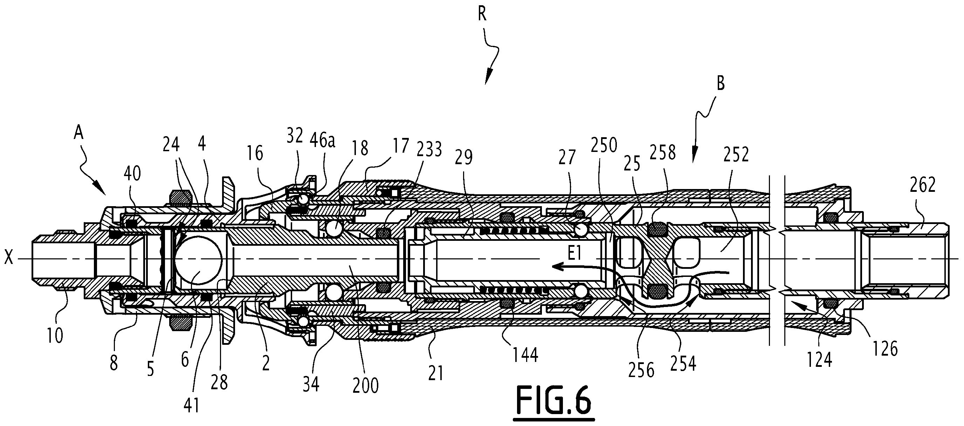

L'élément mâle A comprend également une bague de purge 4 entourant le corps mâle 2 et mobile en translation selon l'axe X par rapport au corps mâle 2. La bague de purge 4 est adaptée pour obturer ou laisser passant un passage de purge du corps mâle 2, formé par plusieurs orifices radiaux 24 faisant communiquer le canal interne 200 avec l'extérieur. La bague de purge 4 est mobile entre une position arrière, représentée à la figure 6, dans laquelle elle obture les orifices de purge 24, et une position avant, représentée sur la figure 1, dans laquelle la bague de purge 4 n'obture plus les orifices de purge 24. La bague de purge 4 présente deux zones d'étanchéité formées par deux joints annulaires 40 et 41 formant entre eux deux une chambre étanche avec le corps mâle 2. Dans la position arrière de la bague de purge 4, les orifices de purge 24 sont situés axialement entre les joints 40 et 41.

La bague de purge 4 comprend une surface de butée avant 42 adaptée pour venir en butée contre une surface de l'élément femelle B.

La bague de purge 4 présente une extension 44 dirigée vers l'avant et dont le diamètre s'élargit en direction de l'avant de l'élément mâle A. Un insert annulaire 46 est vissé sur une partie interne de l'extension 44. L'insert annulaire 46 présente une collerette intérieure 46a, formant une restriction de diamètre s'étendant en direction de l'axe X.

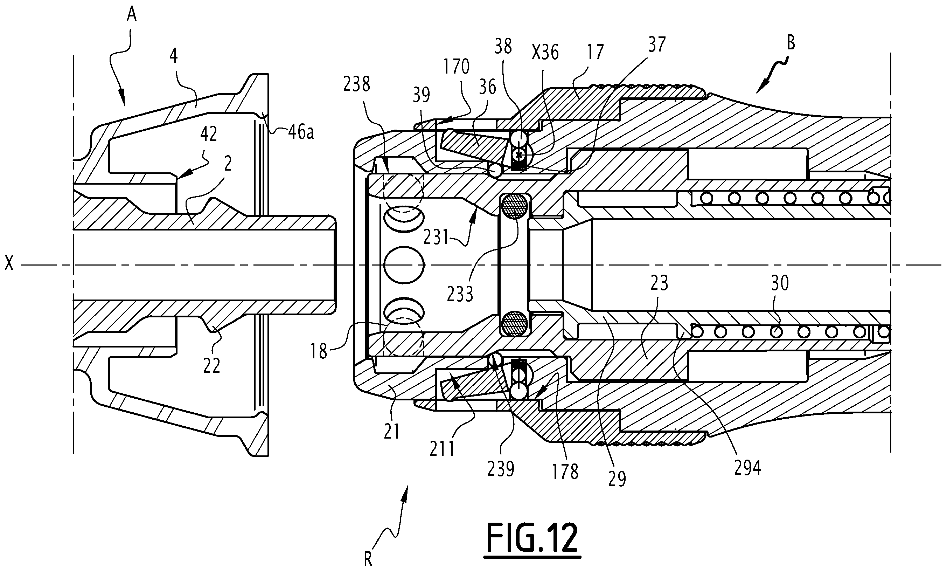

Selon un mode de réalisation alternatif représenté aux figures 12 à 16, l'insert 46 peut être monobloc avec la bague de purge 4.

En arrière de la collerette 22, le corps mâle 2 présente une gorge 26 dont le diamètre est inférieur à celui de la collerette 22.

Une bille 6 est prévue dans le canal 200 et est adaptée pour s'appuyer sur un siège concave 28 du corps mâle 2 pour former un clapet d'obturation lorsque la pression du circuit C1 est installée.

L'élément mâle A comprend également une bague d'about 8, qui entoure une partie du corps mâle 2 et une partie de la bague de purge 4. La bague d'about 8 est percée radialement par des orifices 80 facilitant la libération d'air purgé par les orifices de purge 24. La bague d'about 8 présente une bride radiale 82 apte à s'appuyer contre un support S pouvant être un châssis de véhicule ou une pièce rapportée sur la carrosserie d'un véhicule, et un écrou 84 permettant de visser la bague d'about 8 sur le support S.

L'élément mâle A comprend également un adaptateur 10 fixé à l'arrière du corps mâle 2 par vissage, qui assure la solidarisation de la bague d'about 8 au corps mâle 2 et qui se trouve en communication fluidique avec un circuit pneumatique aval de levage de véhicule. La première canalisation C1 est fixée sur l'adaptateur 10 et communique avec le canal 200.

L'élément femelle B représenté sur la figure 2 comprend un corps femelle incluant un corps femelle arrière 12, un corps femelle intermédiaire 14 et un corps femelle avant 16. Le corps femelle arrière 12 est fixé sur le corps femelle intermédiaire 14, lui-même fixé sur le corps femelle avant 16. Le corps femelle définit un canal interne 120.

Le corps femelle avant 16 présente une rainure interne 160 qui accueille des billes de verrouillage 18. L'élément femelle comprend également un porte-billes 23 logé à l'intérieur du corps femelle avant 16 et mobile en translation selon l'axe X par rapport à ce dernier. Le porte-billes 23 présente des logements radiaux 230 dans lesquels sont logées les billes de verrouillage 18. Le porte-billes 23 définit, sur sa partie avant, un espace de réception 232 de l'extrémité avant du corps mâle 2, et un siège 231 sur un diamètre réduit qui reçoit, dans une gorge 235 au niveau de sa surface radiale interne, un joint 233 de prise d'étanchéité sur le corps mâle 2 qui permet la mise en communication étanche du passage 200 avec le canal interne 120

Le porte-billes 23 est solidaire en translation selon l'axe X d'un corps de soupape 25 mobile en translation par rapport aux corps femelle arrière 12, intermédiaire 14 et avant 16. Le corps de soupape 25 est formé de deux perçages longitudinaux opposés avant 250 et arrière 252. Les perçages avant 250 et arrière 252 débouchent respectivement sur des ouvertures radiales 254 et 256, séparées axialement par un joint d'étanchéité 258 prenant appui sur un siège 122 formé sur le corps femelle arrière 12. Une chambre 124 est prévue dans le corps 12 entre deux joints 126 et 144 pour faire communiquer le fluide à travers les ouvertures radiales 254 et 256 lorsque le corps de soupape 25 ne prend plus appui sur le siège 122.

Le corps de soupape 25 présente, du côté avant par rapport au joint 258, des logements radiaux 260 accueillant des billes d'attelage 27. Les billes d'attelage 27 permettent de solidariser en translation axiale le corps de soupape 25 avec le corps femelle intermédiaire 14. Le corps femelle intermédiaire 14 comprend à cet effet une gorge 140 dans laquelle les billes d'attelage 27 sont reçues sur la figure 2.

L'élément femelle B comprend également une bague interne 29 mobile en translation à l'intérieur du corps de soupape 25, et dont l'extrémité arrière 290 est adaptée pour repousser les billes d'attelage 27 vers l'extérieur dans la gorge 140 de telle manière que le corps de soupape 25 reste fixe en translation par rapport au corps femelle intermédiaire 14.

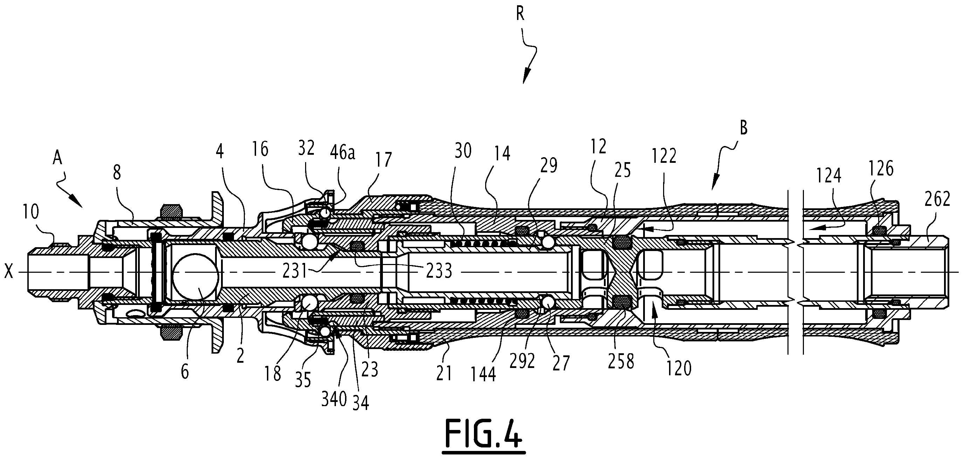

La bague interne 29 est mobile en translation entre une position avant, représentée à la figure 2, et une position arrière représentée à la figure 4, dans laquelle une gorge 292 de la bague interne 29, dont le diamètre maximal est inférieur à celui de l'extrémité arrière 290, est alignée radialement avec les logements 260 de telle manière que les billes d'attelage 27 sont reçues dans la gorge 292 et le corps de soupape 25 est donc libre en translation par rapport au corps femelle intermédiaire 14.

La bague interne 29 est repoussée vers sa position avant par un ressort 30 en appui entre une surface d'un épaulement 264 du corps de soupape 25 interne et tournée vers l'avant et une surface d'une collerette 294 de la bague interne 29 externe et tournée vers l'arrière.

Le corps de soupape 25 comprend, sur sa partie arrière, un corps d'adaptateur 262 permettant le raccordement avec une seconde canalisation C2 fournissant, par exemple, une alimentation en air comprimé. La canalisation C2 communique fluidiquement avec le canal 120.

L'élément femelle B comporte des moyens de pilotage aptes à entraîner la bague de purge 4 de sa position arrière vers sa position avant lors du désaccouplement des éléments mâle A et femelle B par éloignement mutuel.

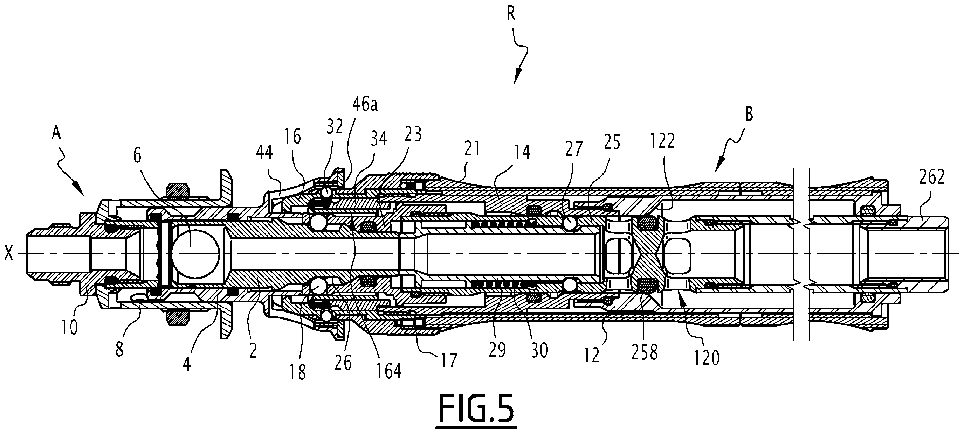

Ces moyens de pilotage comprennent des billes de pilotage 32 logées dans le corps femelle avant 16, et mobiles entre une première position, représentée aux figures 5 et 6, dans laquelle elles font saillie du corps femelle avant 16 de manière à interférer avec la bague de purge 4, et une seconde position représentée à la figure 2, dans laquelle les billes de pilotage 32 ne font pas saillie du corps femelle avant 16. Les billes de pilotage 32 sont logées dans des orifices 162 du corps femelle avant 16, et sont aptes à faire saillie à travers les ouvertures 170 d'une bague externe 17, appelée bague de sélection, qui s'étend autour du corps femelle avant 16. Le positionnement des billes de pilotage 32 en saillie forme une augmentation du diamètre d'enveloppe de la bague de sélection 17 qui devient supérieur au diamètre interne de la collerette 46a de la bague de purge 4, ce qui offre un moyen de coopération entre les billes de pilotage 32 et la collerette 46a pour le pilotage de la bague de purge 4 vers sa position avant. On dit que les moyens de pilotage interfèrent avec la bague de purge 4 lorsqu'ils sont maintenus en saillie du corps femelle 6 et sont aptes à coopérer avec la bague de purge 4 pour qu'elle soit pilotée vers l'avant.

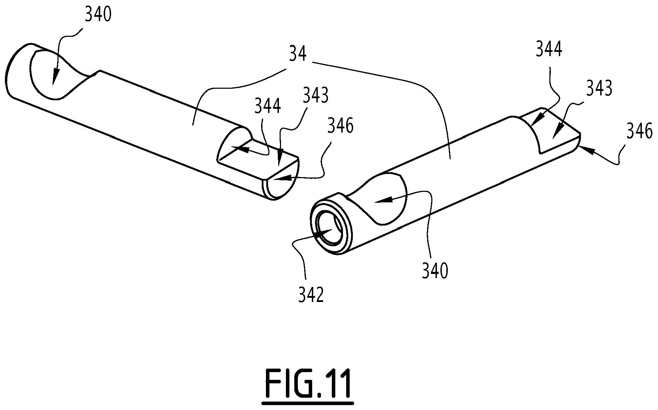

L'élément femelle B comprend des doigts de commande 34, également représentés à la figure 11 et des billes de pilotage 32 qui prennent appui sur la surface radiale des doigts de commande 34. Les doigts de commande 34 sont logés dans le corps femelle avant 16 selon des axes parallèles à l'axe X et sont mobiles axialement entre une première position ou position arrière, représentée aux figures 5 et 6, et dans laquelle les billes de pilotage 32 sont écartées radialement vers leur première position, et une seconde position ou position avant représentée à la figure 2, dans laquelle les billes de pilotage 32 sont alignées radialement avec une encoche 340 en demi-lune des doigts de commande 34, dans laquelle les billes de pilotage 32 sont libres d'atteindre leur seconde position.

Les doigts de commande 34 sont repoussés par un ressort 35 vers leur première position ou position arrière. Le ressort 35 est logé dans un orifice 342 des doigts 34, prévu du côté avant des doigts 34. Du côté arrière des doigts 34, un méplat 343 délimite une première surface de butée 344, qui est décalée axialement vers l'avant par rapport à une surface de butée arrière 346. Les surfaces de butée 344 et 346 sont prévues de part et d'autre d'un axe longitudinal des doigts de commande 34 de telle manière que, dans leur première position ou position arrière, les doigts de commande 34 sont en butée contre une surface 142 du corps femelle intermédiaire 14, et dans leur seconde position ou position avant, en butée par la butée arrière 346 contre une surface 234 du porte-billes 23. L'action exercée par le ressort 35, qui repousse les doigts de commande 34 vers l'arrière, a pour effet que les doigts de commande 34 suivent la translation du porte-billes 23 jusqu'à se retrouver en butée contre la surface 142.

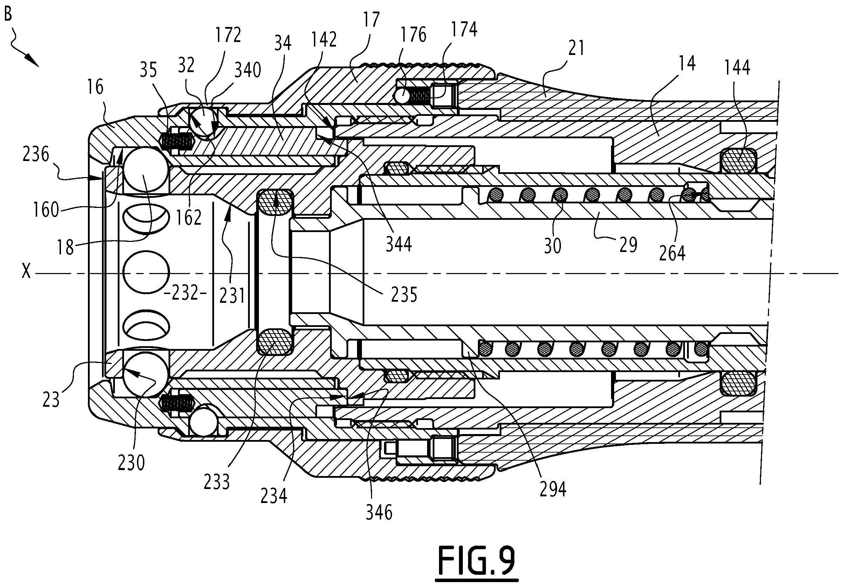

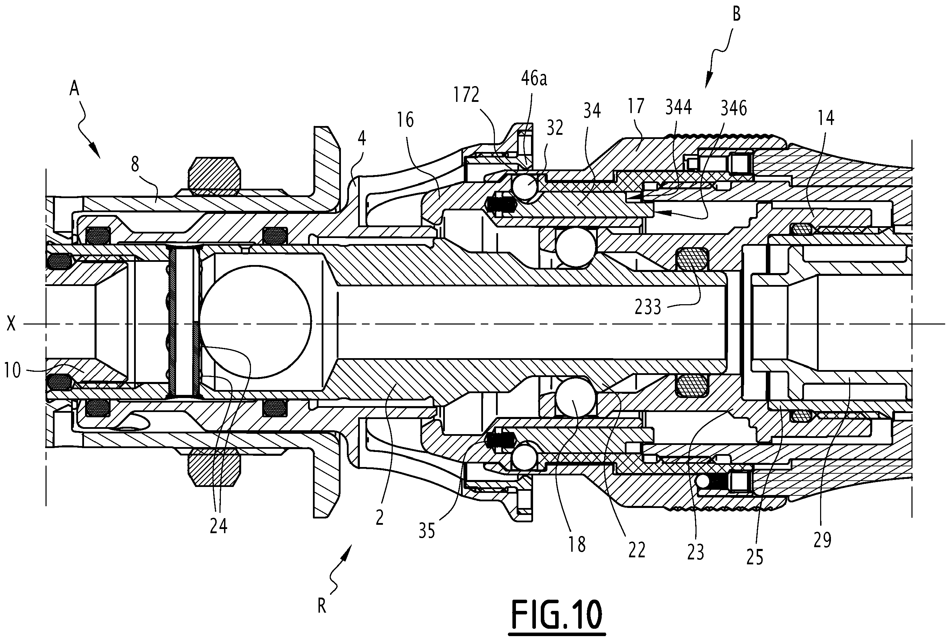

La bague de sélection 17 est mobile en rotation autour de l'axe X par rapport au corps femelle avant 16. Cette rotation permet de décaler angulairement les ouvertures 170 par rapport aux billes de pilotage 32 de telle manière que les billes de pilotage 32 puissent être alignées radialement avec des parties pleines 172 de la bague de sélection 17, qui se trouvent entre les ouvertures 170 dans le sens circonférentiel. Ainsi, la bague de sélection 17 permet de verrouiller la deuxième position des billes de pilotage 32 et la seconde position des doigts de commande 34, et donc de désactiver sélectivement les moyens de pilotage de l'élément femelle B par une manoeuvre simple de l'opérateur. Cette manoeuvre rend les moyens de pilotage inopérants. Dans une première position angulaire de la bague de sélection 17 représentée sur les figures 9 et 10, les billes de pilotage 32 se retrouvent alors alignées avec les parties pleines 172 et ne peuvent donc faire saillie en dehors du corps femelle avant 16 et interférer avec la bague de purge 4, les parties pleines 172 se trouvant intercalées radialement entre la collerette 46a et les billes de pilotage 32. Dans une seconde position angulaire de la bague de sélection 17, représentée à la figure 2, les ouvertures 170 sont alignées avec les billes de pilotage 32 de telle manière que les billes de pilotage 32 sont libres de faire saillie du corps femelle avant 16 et à travers les ouvertures 70 de manière à interférer avec la bague de purge 4.

Les billes de pilotage 32 interfèrent avec la bague de purge 4 si leur éloignement de l'axe X ne permet pas aux billes 32 de pilotage de pallier la collerette 46a de la bague de purge 4 lors de la manoeuvre de désaccouplement.

La bague de sélection 17 comprend des éléments élastiques 174 et des billes 176 permettant de faciliter le positionnement de la bague de sélection 17 dans l'une de ses deux positions.

L'élément femelle B comprend également un manchon de manoeuvre extérieur 21 qui entoure les corps femelles arrière 12 et intermédiaire 14 et permet à un opérateur de manipuler l'élément femelle B lors de l'accouplement, du désaccouplement et de la sélection.

Le fonctionnement du raccord R est décrit dans la suite en référence aux figures 3 à 10.

Par la manoeuvre en rotation de la bague de sélection 17 par rapport au corps femelle avant 16, deux modes de fonctionnement peuvent être choisis: un mode de fonctionnement activé, représenté sur les figures 2 à 8, dans lequel les billes de pilotage 32 peuvent faire saillie du corps femelle avant 16, et un mode désactivé, représenté sur les figures 9 et 10, dans lequel les billes de pilotage 32 sont masquées par les parties pleines 172. Dans le mode activé, la manoeuvre de désaccouplement et de purge est réalisée en un seul mouvement de retrait, tandis que dans le mode désactivé, la manoeuvre de désaccouplement et de purge est réalisée en deux mouvements distincts.

Dans le mode désactivé, qui peut être notamment utilisé lors d'opérations de levage de véhicule dans un garage, la purge est réalisée par un manoeuvre supplémentaire d'un opérateur qui fait suite à la manoeuvre de désaccouplement du raccord R.

Dans le mode activé, qui peut correspondre à une configuration de changement de pneumatiques rapide, dans laquelle la manoeuvre de désaccouplement et de purge doit être effectuée dans un seul mouvement pour plus de rapidité, la purge est réalisée dans la même manoeuvre que le désaccouplement des éléments mâle et femelle du raccord R.

Sur les figures 3 à 6, la phase d'accouplement du raccord en mode de fonctionnement activé est décrite. L'accouplement du raccord R survient lorsque, par exemple, un véhicule arrive dans un stand où se tient un opérateur, le véhicule présentant l'élément mâle A dont la bague de purge 4 apparaît en position avancée, les passages de purge latéraux 24 étant dégagés. L'élément femelle B est manipulé par l'opérateur à l'aide du manchon de manoeuvre externe 21. L'élément femelle B est rapproché, aligné et mis en contact avec le corps mâle 2. Les éléments mâle A et femelle B correctement positionnés, sont rapprochés l'une de l'autre de telle sorte qu'une surface avant 236 du porte-billes 23, guidée par l'insertion du corps mâle 2 dans l'espace de réception 232, repousse la bague de purge 4 vers l'arrière par contact avec la butée 42, selon la flèche F1.

Les billes de verrouillage 18 sont libres de se déplacer radialement dans leur logement 260 au contact de la collerette 22 et de la franchir lors de l'intersection de l'élément mâle A, car leur position radiale libre permet de pallier le diamètre maximal de la collerette 22 à l'accouplement, lorsque les billes 18 se déplacent radialement vers leur deuxième position. La collerette 22 est franchie lorsque les billes de verrouillage 18 dépassent la position axiale, par rapport à la position de l'élément mâle A, qui est situé au sommet de la collerette 22. La figure 3 représente cette première configuration d'accouplement, dans laquelle la collerette 22 a franchi axialement les billes de verrouillage 18. Dans cette configuration, les doigts de commande 34 sont en seconde position ou position avant, de sorte que les billes de pilotage 32 sont libres radialement et prennent position dans les encoches en demi-lune 340 pour ne pas faire saillie de la bague de sélection 17. Leur position radiale permet de pallier le diamètre minimal de la collerette 46a de la bague de purge 4. Dans cette configuration, la bague interne 29 a été poussée vers l'arrière par l'avant du corps mâle 2 et atteint une position située à mi-course de sa position reculée. Les billes d'attelage 27 maintiennent le corps de soupape 25 et le corps femelle intermédiaire 14 solidaires en translation l'un de l'autre. Les circuits C1 et C2 ne sont plus en communication.

Lorsque l'opérateur poursuit la séquence d'accouplement et d'insertion de l'élément mâle A, le raccord R se trouve dans une deuxième configuration représentée à la figure 4. La bague interne 29 est suffisamment repoussée vers l'arrière pour que la gorge 292 soit alignée radialement avec les billes d'attelage 27, ce qui permet aux billes d'attelage 27 de se rétracter radialement vers l'axe X dans la gorge 292 et désatteler le corps femelle intermédiaire 14 du corps de soupape 25, autrement dit de désolidariser en translation les deux corps 14 et 25. La bague interne 29 s'attelle au corps de soupape 25 et les solidariser en translation, ce qui a pour effet de limiter le déplacement du corps de soupape 25 vers l'avant sous l'effet de la poussée du corps mâle 2 et grâce au ressort 30.

Le corps de soupape 25 entraînant dans son déplacement vers l'arrière le porte-billes 23, celui-ci se déplace par rapport au corps femelle avant 16. Les doigts de commande 34 étant repoussés vers l'arrière par les ressorts 35, les doigts de commande 34 se déplacent également vers l'arrière ce qui a pour effet la sortie radiale vers l'extérieur des billes de pilotage 32 des encoches 340. Les billes de pilotage 32 commencent donc à faire saillie à l'extérieur de la bague de sélection 17. La collerette 46a est franchie par les billes de pilotage 32 lorsque les billes de pilotage 32 dépassent la position axiale, par rapport à la position de l'élément mâle A, qui est situé au sommet de la collerette 46a.

Dans une troisième configuration d'accouplement représentée à la figure 5, le mouvement d'insertion s'étant poursuivi, le porte-billes 23 a pris appui contre la collerette 22 et s'est suffisamment reculé par rapport au corps femelle avant 16 pour que les doigts de commande 34 se retrouvent en appui contre le corps femelle intermédiaire 14. Les billes de pilotage 32 émergent donc de façon maximale de la bague de sélection 17. La position radiale des billes de pilotage 32 ne permet plus de pallier le diamètre de la collerette 46a de la bague de purge 4.

Dans la configuration de la figure 5, le corps femelle avant 16 entre en contact avec l'extension 44 de la bague de purge 4, ce qui a pour effet d'entraîner la bague de purge 4 vers l'arrière et d'obturer les passages de purge latéraux 24. Cette obturation est effective et totale dès que les orifices de purge 24 apparaissent entre les deux joints internes 40 et 41 de la bague de purge 4. La poursuite du mouvement de l'élément femelle B a augmenté le décalage axial entre le porte-billes 23 et le corps femelle avant 16 de telle manière que les billes de verrouillage 18 sont à présent repoussées vers l'axe X dans la gorge 26 par une surface interne 164 du corps femelle avant 16. La position radiale des billes de verrouillage 18 ne permet plus de pallier le diamètre maximal de la collerette 22. Les billes de verrouillage 18 sont donc dans leur première position correspondant au verrouillage du raccord R.

Dans le même temps, le corps de soupape 25 a poursuivi son mouvement vers l'arrière de l'élément femelle B, et le joint d'étanchéité 258 perd progressivement le contact avec le siège 122, de sorte que la soupape est ouverte et l'alimentation en air comprimé du circuit aval C1 via le canal 200 débute. La position du corps de soupape 25 autorise le passage de fluide entre les canalisations C1 et C2.

Lorsque le mouvement d'accouplement se termine, la position accouplée représentée à la figure 6 est atteinte. La bague de purge 4 a été complètement repoussée en position arrière, et le corps de soupape 25 a été repoussé dans sa position arrière maximale par le corps mâle 2 de manière à permettre l'écoulement de fluide selon la flèche E1, du perçage arrière 252 vers le perçage avant 250 à travers les ouvertures 254 et 256. Le fluide s'écoule dans la bague interne 29 puis passe dans le canal 200 et est ainsi transféré de la deuxième canalisation C2 vers la première canalisation C1 pour permettre l'activation des vérins d'élévation du véhicule. L'air circule entre l'élément femelle B et l'élément mâle A de façon étanche avec l'extérieur tel que le passage de fluide est opéré. La bille de clapet 6 est écartée de son siège 28 par la pression du fluide contre une goupille de sécurité 5 de l'élément mâle A.

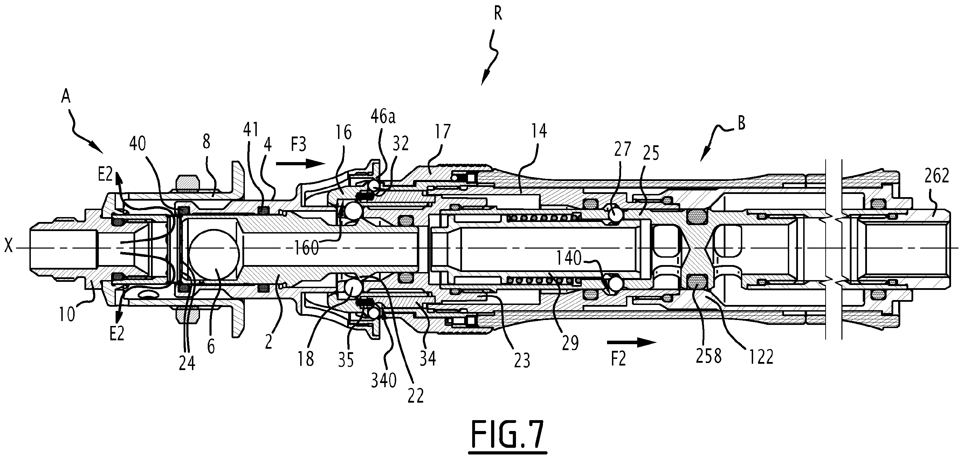

Quand le remplissage en air du circuit pneumatique de vérin a atteint une pression définie, et que les opérations de changement des pneumatiques du véhicule ont été réalisées, l'opérateur engage le désaccouplement du raccord R pour abaisser le véhicule. Pour ce faire, l'opérateur tire l'élément femelle B vers l'arrière selon la flèche F2. Les billes de pilotage 32 étant en saillie de la bague de sélection 17, lors du retrait de l'élément femelle B, celles-ci prennent appui contre la collerette interne 46a de la bague de purge 4. Les billes de pilotage 32 entraînent donc la bague de purge 4 vers l'avant selon la flèche F3, de sorte que les orifices de purge 24 ne sont plus couverts par la bague de purge 4 et ne se trouvent plus entre les joints 40 et 41. Cette configuration est représentée à la figure 7. La première canalisation reliée à l'élément mâle A purge donc son air à travers les orifices 24, comme cela est représenté par les flèches E2. Les vérins alimentés par la première canalisation abaissent leur pression et le véhicule s'abaisse.

Au cours du mouvement de désaccouplement, les billes de verrouillage 18 ont été entraînées vers l'avant de l'élément femelle B par la collerette 22. Les billes 18 ont entraîné dans leur mouvement le porte-billes 23, vers l'avant par rapport au corps femelle avant 16. Dans son mouvement vers l'avant, le porte-billes 23 a soulevé les doigts de commande 34 de leur butée 344 contre le corps femelle intermédiaire 14 par le contact de la surface de butée 346 contre le porte-billes 23, et déplacé vers l'avant le corps de soupape 25. Sur la figure 7, le déplacement vers l'avant du porte-billes 23 a repoussé les doigts de commande 34, de sorte que les billes de pilotage 32 sont sur le point de s'engager dans les encoches en demi-lune 340. Les billes de verrouillage 18 se trouvent presque alignées axialement avec l'encoche 160 et sont sur le point de franchir la collerette 22. Le joint 258 est à nouveau en appui contre le siège 122, et la circulation de fluide est stoppée. Les billes d'attelage 27 se sont rapprochées de la gorge 140 et sont sur le point de s'y engager, l'attelage entre la bague interne et le corps de soupape 25 étant sur le point de se terminer et l'attelage entre le corps de soupape 25 et le corps femelle intermédiaire 14 débutant.

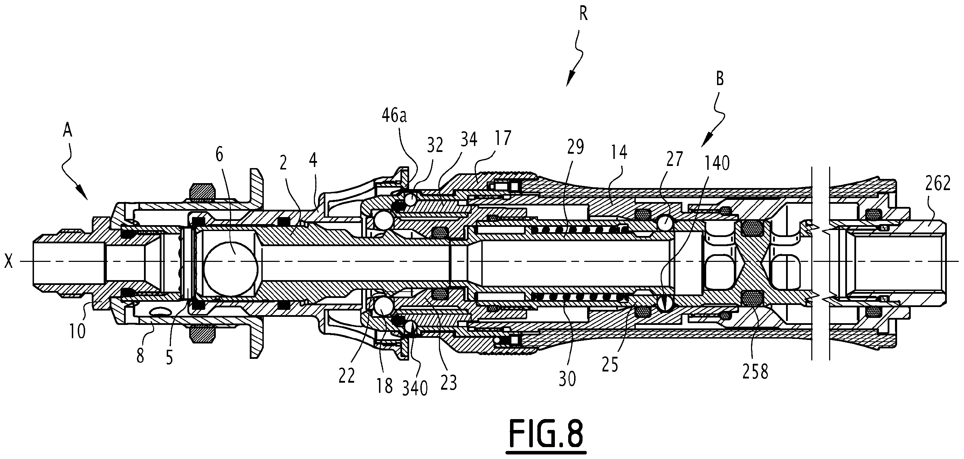

Sur la figure 8, l'élément femelle B a été davantage retiré vers l'arrière. Les billes de verrouillage 18 retiennent encore axialement le porte-billes 23 et le corps de soupape 25 en prise avec le corps mâle 2 par l'intermédiaire de la collerette 22. Le porte-billes 23 a poursuivi son mouvement vers l'avant et entrainé les doigts de commande 34 de telle manière que les doigts sont complètement retournés vers leur seconde position ou position avant, permettant aux billes de pilotage 32 de reprendre place dans les encoches en demi-lune 340 sous l'action du passage de la collerette 46a au cours du retrait de l'élément femelle B. Sous l'action du ressort 30 qui repousse la bague interne 29 vers l'avant, les billes d'attelage 27 se sont logées dans la gorge 140, attelant le corps de soupape 25 avec le corps femelle intermédiaire 14. L'action du ressort 30 contribue à repousser l'élément mâle A vers l'arrière pour terminer la manoeuvre de désaccouplement notamment à partir de la deuxième configuration d'accouplement.

Le fonctionnement en mode désactivé du raccord R est représenté sur les figures 9 et 10, les configurations d'accouplement restant identiques. Dans ce mode de fonctionnement, les billes de pilotage 32 sont maintenues escamotées dans leur logement 162 et dans les encoches 340 des doigts de commande 34, par les parties pleines 172 de la bague de sélection 17. Les billes de pilotage 32 ne peuvent donc pas faire saillie de la bague de sélection 17 et ne peuvent pas interférer avec la bague de purge 4 ni agir sur l'ouverture des orifices de purge 24 au retrait de l'élément femelle B. Le maintien en position rétractée des billes de pilotage 32 empêche les doigts de commande 34 de s'éloigner vers l'arrière sous l'action des ressorts 35 lorsque le contact entre la butée arrière 346 et la butée 234 est perdu lors de l'accouplement du raccord R.

Lors de la manoeuvre de retrait représenté à la figure 10, la bague de purge 4 n'est donc pas tirée vers l'avant par les billes de pilotage 32, et la manoeuvre de désaccouplement se poursuit sans que la première canalisation C1 soit purgée. Après le retrait de l'élément femelle B de l'élément mâle A, l'opérateur doit manoeuvrer la bague de purge 4 vers l'avant pour abaisser le véhicule, et pour préparer l'élément mâle A à de futures opérations de raccordement. La manoeuvre de désaccouplement montre une séquence avec une troisième, seconde et première configuration d'accouplement à partir de la quatrième configuration d'accouplement de passage de fluide.

Les quatre configurations de rapprochement mutuel décrites sont identifiées dans la séquence de l'accouplement ou de désaccouplement du raccord R, associée à l'emmanchement de l'élément mâle A dans l'élément femelle B du raccord R.

Les ressorts 35 et le ressort 30 sont suffisants pour permettre le fonctionnement automatique du raccord R. Ces ressorts, ainsi que le frottement des joints de l'élément femelle B, exercent une force que l'opérateur doit contrer lors de la manoeuvre d'accouplement.

Un deuxième mode de réalisation de l'invention est représenté sur les figures 12 à 16. Dans ce mode de réalisation, les éléments communs au premier mode de réalisation portent les mêmes références et fonctionnent de la même manière. Seules les différences par rapport au premier mode de réalisation sont détaillées ci-après.

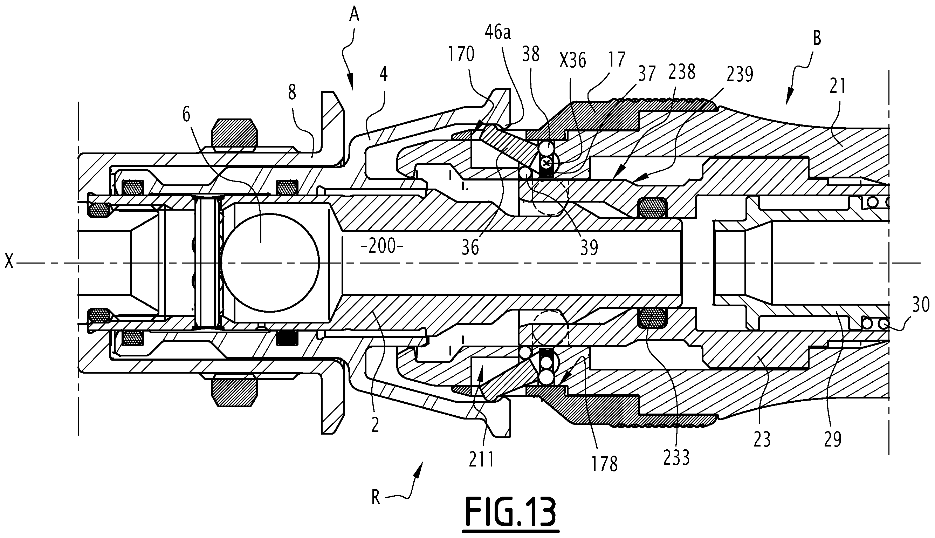

Dans ce mode de réalisation, les moyens de pilotage désactivables sont formés, en lieu et place des billes de pilotage 32, par des griffes 36 mobiles entre une position déployée, représentée à la figure 13, et une position rétractée, représentée à la figure 12. Dans leur position déployée, les griffes 36 font saillie à travers les ouvertures 170 de la bague de sélection 17 et interfèrent avec la collerette 46a. En position rétractée, les griffes 36 ne font pas saillie hors des ouvertures 170 et n'interfèrent pas avec la bague de purge 4. Les griffes 36 sont mobiles en rotation entre leur position déployée et leur position rétractée autour d'un axe X36. Les axes X36 sont écartés vers l'extérieur par des ressorts 37. Le manchon de manoeuvre externe, le corps femelle avant et le corps femelle intermédiaire sont réunis en un seul corps 21. Des billes 38 sont interposées entre les axes X36 et une surface interne 178 de la bague de sélection 17.

L'élément femelle B comporte des billes de commande 39 des griffes 36. Les billes de commande 39 sont mobiles dans des puits radiaux 211 traversant du corps 21 entre une position basse, représentée à la figure 12, et une position haute, représentée à la figure 13. Dans leur position basse, les billes 39 ne repoussent pas les griffes 36 vers l'extérieur vers leur position déployée. Dans leur position haute, les billes de commande 39 repoussent et maintiennent les griffes 36 vers l'extérieur, vers leur position déployée. Les billes de commande 39 sont adaptées pour coopérer par contact avec une surface externe 238 du porte-billes 23 et avec une rampe 239 du porte-billes 23, qui prolonge la surface 238 vers l'arrière avec un diamètre décroissant. Ainsi, en fonction de la position du porte-billes 23 le long de l'axe X par rapport au corps 21, les billes de commande 39 sont plus ou moins écartées vers l'extérieur de manière à commander la rotation des griffes 36 entre une position rétractée et une position déployée.

En configuration désaccouplée du raccord représentée à la figure 12, les billes de commande 39 sont positionnées sur les rampes 239. Les billes 39 sont donc dans leur position basse, les griffes 36 sont libres d'atteindre leur position rétractée par un mouvement centripète et donc apparaissent dans leur position rétractée.

Lors de l'accouplement, l'élément femelle B est emmanché sur l'élément mâle A, le porte-billes 23 subit un mouvement de translation vers l'arrière, ce qui a pour effet que les billes de commande 39 franchissent la rampe 239 pour se trouver en contact avec la surface 238, dont le diamètre est supérieur à celui de la rampe 239. Les billes de commande 39 sont donc écartées vers leur position haute, repoussent donc et maintiennent les griffes 36 vers leur position déployée.

L'attelage du porte-billes 23 et du corps femelle intermédiaire 14 lors de la première phase d'accouplement a pour effet que la collerette 46a de la bague de purge 4 se trouve au-dessus des ouvertures 170 de manière que la collerette 46a se trouve en arrière des griffes 36 lors de leur arrivée en position déployée.

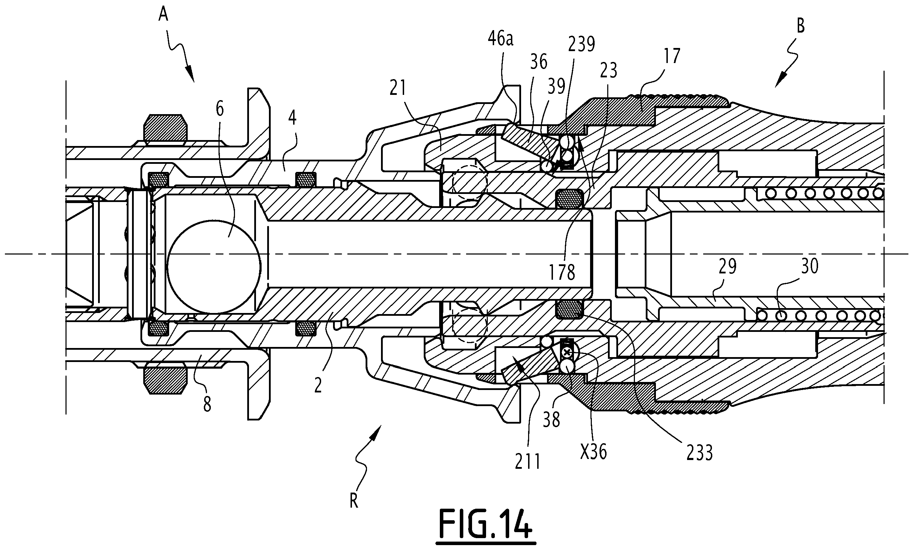

Lors du désaccouplement représenté sur la figure 14, les griffes 36 en position déployée entraînent la bague de purge 4 vers sa position avant. Ensuite, le retrait de l'élément mâle A a pour effet la translation vers l'avant du porte-billes 23 jusqu'à une position axiale dans laquelle les billes 39 retrouvent leur appui contre la rampe 239 et retournent dans leur position basse. Les griffes 36 sont alors libres d'être repoussées en direction de l'axe X par la collerette 46a, permettant la libération de la bague de purge 4 de l'élément femelle B et l'extraction complète de l'élément mâle A.

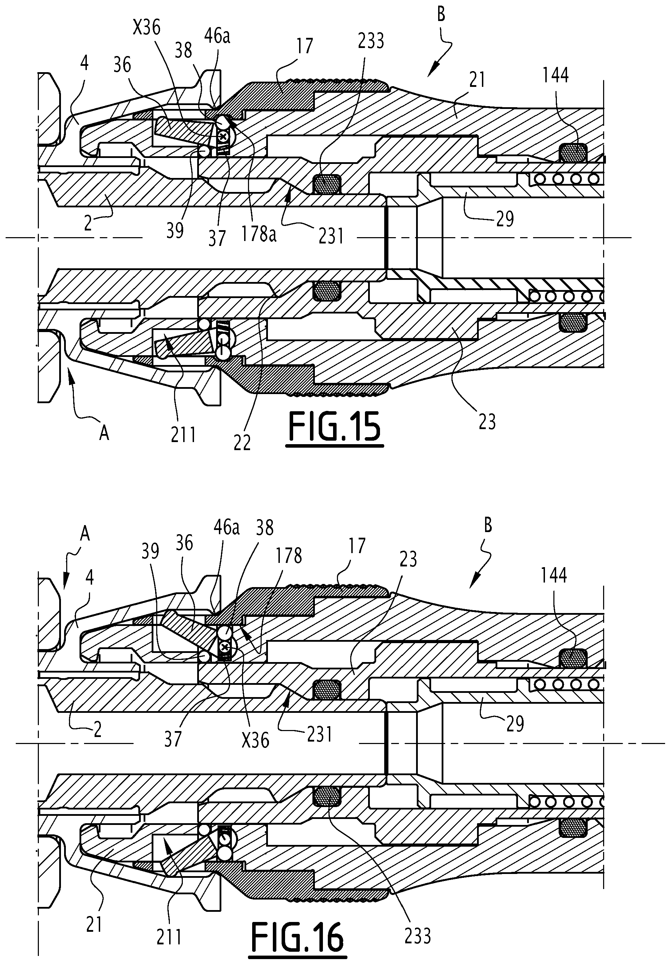

Dans ce mode de réalisation, la bague de sélection 17 permet également de faire passer l'élément femelle B dans le mode de fonctionnement désactivé. Pour ce faire, la surface interne 178, avec laquelle les billes 38 coopèrent, est munie d'encoches 178a, qui s'étendent sur des secteurs angulaires limités. Ces encoches 178a sont adaptées pour accueillir les billes 38 de manière à permettre leur écartement vers l'extérieur sous l'action des ressorts 37. Ceci a pour effet de déplacer l'axe de rotation X36 vers l'extérieur. Le déplacement de l'axe X36 vers l'extérieur modifie la cinématique de rotation des griffes 36 de telle manière que les billes de commande 39, dans leur position haute représentées à la figure 15, ne repoussent plus les griffes 36 jusqu'à leur position déployée du mode activé, mais jusqu'à une position intermédiaire dans laquelle les griffes 36 ne dépassent pas de la bague de sélection 17 et ne font pas obstacle à la collerette 46a lors de la manoeuvre de désaccouplement.

Par la rotation autour de l'axe X de la bague de sélection 17, les billes 38 se retrouvent alternativement en face des encoches 178a ou bien de la surface 178. Comme cela est représenté sur la figure 16, lorsque le porte-billes 23 est positionné à la même position axiale que la figure 15, les billes de commande 39 écartent les griffes 36 vers l'extérieur de telle manière qu'elles interfèrent avec la collerette 46a dans le mode de fonctionnement activé.

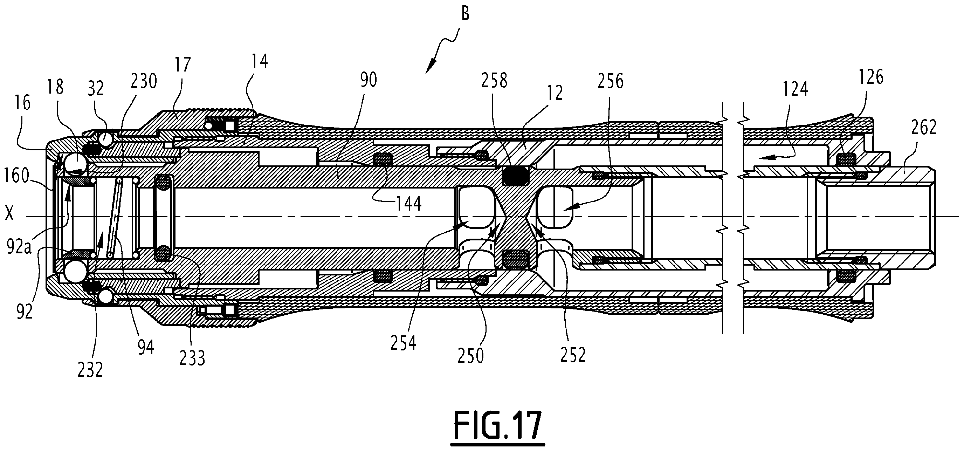

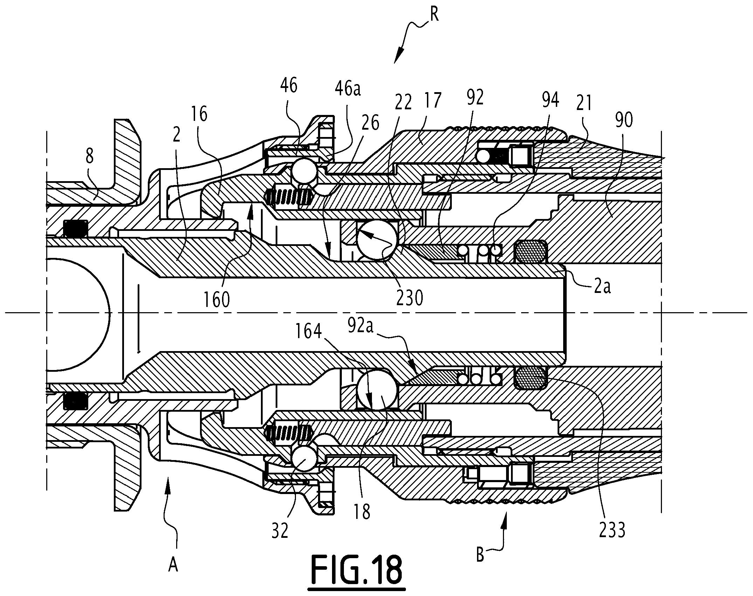

Un troisième mode de réalisation de l'invention est représenté aux figures 17 et 18. Dans ce mode de réalisation, les éléments communs au premier mode de réalisation portent les mêmes références et fonctionnent de la même manière. Seules les différences par rapport au premier mode de réalisation sont décrites ci-après.

Comme cela est représenté à la figure 17, le porte-billes 23 et le corps de soupape 25 sont réunis en une unique pièce 90, et les billes de verrouillage 18 jouent également le rôle de billes d'attelage du corps 90 avec le corps femelle. Plus précisément, en configuration désaccouplée de l'élément femelle B, le corps 90 est maintenu attelé avec le corps femelle avant 16 par les billes de verrouillage 90, qui sont engagées dans la rainure 160. Une bague interne 92 logée dans l'espace de réception 232 est alignée axialement avec les logements 230 et les billes 18 de telle manière qu'elle maintient les billes 18 dans la rainure 160. Un ressort 94 maintient la bague interne 92 dans sa position avant, dans laquelle elle maintient les billes 18 dans la rainure 160, et par conséquent le corps 90 attelé avec le corps femelle avant 16.

La bague interne 92 joue un rôle similaire à celui de la bague interne 29 du premier mode de réalisation et en phase de désaccouplement n'est plus attelée mais maintenue en arrière par le corps mâle 2 à l'encontre de l'effort du ressort 94. En effet, lors de l'approche de l'élément femelle B, l'extrémité avant 2a du corps mâle 2 s'engage dans la bague interne 92, dont le diamètre interne est supérieur au diamètre externe de l'extrémité avant 2a. La bague interne 92 présente une surface tronconique avant 92a complémentaire de la géométrie de la collerette 22. Lors de son insertion, le corps mâle 2 repousse donc la bague interne 92 vers l'arrière, à l'encontre de l'effort exercé par le ressort 94. La collerette 22 du corps mâle 2 repousse la bague 92 vers l'arrière jusqu'à ce que la gorge 26 parvienne en regard des logements 230. A ce moment, la bague 92 et la collerette 22 n'empêche plus les billes 18 de s'engager dans la gorge 26. Les billes 18 sont alors dégagées de la rainure 160, et le corps 90 n'est alors plus attelé avec le corps femelle avant 16 et est libre de se déplacer vers l'arrière sous l'action de la poussée continue du corps mâle 2. Lorsque la poussée de corps mâle 2 se poursuit, comme cela est représenté à la figure 18, le corps mâle 2 est verrouillé dans le corps 90 par les billes 18, qui sont logées dans la gorge 26 et y sont maintenues par la surface interne 164 du corps femelle avant 16.

En variante, et dans le cadre de l'invention, il est prévu que certaines configurations soient atteintes dans un ordre différent du premier mode de réalisation décrit ci-dessus relatif à la course de rapprochement des éléments de raccord, ou que les configurations soient atteintes à une distance similaire d'éloignement mutuel des éléments de raccord lors des manoeuvres d'accouplement ou de désaccouplement.

Selon un mode de réalisation non représenté, les doigts de commande 34 peuvent être remplacés par une rampe ménagée sur le porte-billes 23 et apte à repousser et maintenir directement les billes de pilotage 32 vers leur position externe dans laquelle elles font interférence avec la bague de purge 4. Dans un tel cas, les billes de pilotage 32 sont confondues avec des billes de commande similaires aux billes de commande 39, et sont mobiles entre un diamètre supérieur, pour lequel les billes de pilotage 32 font saillie du corps femelle avant 16 et interfèrent avec la collerette 46a de la bague de purge 4, et un diamètre supérieur pour lequel les billes de pilotage 32 ne font pas saillie du corps femelle avant 16, selon un principe similaire à celui du second mode de réalisation.

Selon un autre mode de réalisation non représenté, le relief de verrouillage du corps mâle 2 peut ne pas comprendre de collerette 22 et être formé uniquement par une gorge similaire à la gorge 26 de diamètre inférieur au diamètre de la partie avant du corps mâle 2, formant un obstacle pour les billes de verrouillage 18 en s'opposant au retrait de la gorge dans la troisième configuration d'accouplement.

Selon un autre mode de réalisation non représenté, un organe du corps femelle 6 ou rapporté sur le corps femelle 6 peut maintenir les billes de verrouillage 18 dans leur première position dans la troisième configuration d'accouplement du raccord R.

Selon un autre mode de réalisation non représenté, la gorge 26 peut présenter une largeur axiale réduite de sorte que le porte-billes 26 ne prenne pas appui sur la collerette 22 mais que le porte-billes 23 soit retenu axialement à l'accouplement par la butée des billes de verrouillage 18 sur le fond de la gorge 26.

Selon un autre mode de réalisation non représenté, les moyens de pilotage de la bague de purge 4 peuvent faire saillie de la bague de sélection 17 à l'accouplement sans interférer avec la bague de purge 4, par exemple en s'escamotant de manière élastique au contact de la collerette 46a à l'accouplement, et en étant maintenus en saillie lors du désaccouplement pour entrainer et interférer avec la bague de purge 4.

Selon un autre mode de réalisation non représenté, le corps mâle 2 peut comporter un relief de réception du joint avant 41, qui permet à celui-ci de s'insérer partiellement dans le corps mâle 2 de manière à permettre le retour de la bague de purge 4 en deux temps, différenciés par un instant marqué où le joint arrière 40 recouvre partiellement les orifices de purge 24, le joint 41 étant partiellement engagé dans le relief de réception du corps mâle 2. Ceci permet une purge lente et une descente progressive du véhicule.

Selon un autre mode de réalisation non représenté, l'élément femelle B présente une enceinte avant de réception de la bague de purge 4 entre le porte billes 23 et le corps femelle avant 16 à l'accouplement, la bague de purge 4 disposant d'une collerette extérieure, formant une extension de diamètre qui s'étend à l'opposé de l'axe X, et les doigts de commande 34 agissent sur l'extérieur des billes de verrouillage 18, si bien que dans la configuration des moyens de pilotage activés, les billes de verrouillage 18 s'escamotent vers l'intérieur selon un diamètre inférieur au diamètre de la collerette pour entrainer la bague de purge 4 vers sa position avant.

Selon une autre variante, les billes de verrouillage du raccord peuvent être remplacées par un autre moyen de coopération avec le relief de l'élément mâle qui permet de limiter l'éloignement mutuel des deux éléments et le retrait de l'élément femelle B à l'accouplement.

Le passage d'air peut être envisagé depuis la première canalisation C1 vers la deuxième canalisation C2 de sorte que la configuration de distribution de fluide est inversée, depuis le circuit amont relié au compresseur et à la première canalisation C1 vers le circuit aval relié au réseau pneumatique de vérins et à la deuxième canalisation C2.

Les caractéristiques techniques des modes de réalisations et variantes décrits ci-dessus peuvent être combinées pour former d'autres modes de réalisation de l'invention.

## Revendications

1. Raccord rapide (R) pour la jonction étanche de canalisations de fluide (C1, C2), comportant un élément mâle (A) adapté pour être relié à une première canalisation (C1) et un élément femelle (B) adapté pour être relié à une deuxième canalisation (C2), l'élément mâle (B) comportant :
- un corps mâle (2) pourvu d'un relief de verrouillage (22) et définissant un canal interne (200) en communication avec la première canalisation (C1),
- une bague de purge (4) de la première canalisation (C1), entourant le corps mâle (2), et mobile entre une position arrière, dans laquelle la bague de purge (4) obture un passage de purge (24) du corps mâle (2), et une position avant, dans laquelle la bague de purge (4) n'obture plus le passage de purge (24),
l'élément femelle (B) comportant :
- un corps femelle (12, 14, 16) définissant un canal interne (120) en communication avec la deuxième canalisation (C2),
- un porte-billes (23 ; 90) disposé à l'intérieur du corps femelle (12, 14, 16), formant un logement de réception (232) du corps mâle (2) et portant des billes de verrouillage (18) du corps mâle (2), lesdites billes de verrouillage (18) étant mobiles dans un logement (230) entre une première position, dans laquelle elles sont aptes s'opposer au retrait du relief de verrouillage (22), et une deuxième position, dans laquelle les billes de verrouillage (18) permettent le retrait du relief de verrouillage (22),
- un corps de soupape (25 ; 90) solidaire du porte-billes (23 ;90), mobile en translation dans le corps femelle (12, 14, 16) entre une position avant, dans laquelle il obture le passage de fluide vers la deuxième canalisation (C2) et une position arrière, dans laquelle le passage vers la deuxième canalisation (C2) est ouvert, le corps de soupape (25 ; 90) comportant des billes d'attelage (27 ; 18) adaptées pour solidariser en translation le corps de soupape (25) et le corps femelle (12, 14, 16),
- une bague interne (29 ; 92) disposée à l'intérieur du corps de soupape (25 ; 90), adaptée, dans une position de retenue, pour maintenir le corps de soupape (25 ;90) et le corps femelle (12, 14, 16) attelés par les billes d'attelage (27 ; 18) lorsque l'élément femelle (B) est désaccouplé de l'élément mâle (A),
le raccord (R) étant **caractérisé en ce que** :
- dans une première configuration d'accouplement par rapprochement mutuel de l'élément mâle (A) et de l'élément femelle (B), les billes de verrouillage (18) ont franchi le relief de verrouillage (22) de l'élément mâle (A),
- dans une deuxième configuration d'accouplement par rapprochement mutuel, la bague interne (29 ; 92) a atteint une position dans laquelle elle ne maintient plus le corps de soupape (25 ; 90) et le corps femelle (12, 14, 16) attelés par les billes d'attelage (27 ; 18),
- dans une troisième configuration d'accouplement par rapprochement mutuel, le corps femelle (12, 14, 16) maintient les billes de verrouillage (18) dans leur première position;
- dans une quatrième configuration d'accouplement par rapprochement mutuel, le corps de soupape (25 ; 90) a atteint une position qui autorise le passage de fluide entre les deux canalisations (C1, C2),
- l'élément femelle (B) comporte des moyens de pilotage (32 ; 36) aptes à entrainer la bague de purge (4) de sa position arrière vers sa position avant lors du désaccouplement des éléments mâle (A) et femelle (B) par éloignement mutuel.

2. Raccord rapide selon la revendication 1, **caractérisé en ce que** les moyens de pilotage (32 ; 36) sont sélectivement désactivables de telle sorte qu'ils n'entraînent pas la bague de purge (4) lors du désaccouplement.

3. Raccord rapide selon la revendication 2, **caractérisé en ce que** l'élément femelle (B) comprend une bague de sélection (17) permettant la désactivation des moyens de pilotage (32 ; 36), montée autour du corps femelle (12, 14, 16) et mobile en rotation entre une première position, dans laquelle elle maintient les moyens de pilotage (32 ; 36) dans une position dans laquelle ils ne peuvent entraîner la bague de purge (4) lors du désaccouplement des éléments mâle (A) et femelle (B), et une seconde position, dans laquelle les moyens de pilotage (32 ; 36) sont aptes à entraîner la bague de purge (4) de sa position arrière vers sa position avant lors du désaccouplement.

4. Raccord rapide selon l'une des revendications précédentes, **caractérisé en ce que** les moyens de pilotage sont des billes de pilotage (32) logées dans le corps femelle (16) et mobiles entre une première position, dans laquelle les billes de pilotage (32) font saillie du corps femelle (16) et interfèrent avec la bague de purge (4), et une seconde position, dans laquelle les billes de pilotage (32) ne font pas saillie du corps femelle (16).

5. Raccord rapide selon la revendication 4, **caractérisé en ce que** l'élément femelle (B) comporte des doigts de commande (34) des billes de pilotage (32), mobiles entre une première position, dans laquelle les billes de pilotage (32) sont écartées radialement vers leur première position, et une seconde position , dans laquelle les billes de pilotage (32) sont alignées radialement avec une encoche (340) des doigts de commande (34) et sont libres d'atteindre leur seconde position.

6. Raccord rapide selon la revendication 5, **caractérisé en ce que** les doigts de commande (34) des billes de pilotage (32) sont maintenus dans leur seconde position par le porte-bille (23 ; 90) à l'encontre d'un effort d'un ressort (35) en première configuration et deuxième configurations d'accouplement, et sont maintenus dans leur première position par le corps femelle (14) en troisième et quatrième configurations d'accouplement.

7. Raccord rapide selon l'une des revendications 1 à 3, **caractérisé en ce que** les moyens de pilotage sont des griffes (36) mobiles entre une position déployée, dans laquelle elles font saillie du corps femelle (16) et interfèrent avec la bague de purge (4), et une position rétractée, dans laquelle les griffes (36) n'interfèrent pas avec la bague de purge (4).

8. Raccord rapide selon la revendication 7, **caractérisé en ce que** l'élément femelle (B) comporte des billes de commande (39) des griffes (36), mobiles entre une position basse, dans laquelle les griffes (36) sont libres d'atteindre leur position rétractée de façon centripète, et une position haute, dans laquelle les billes de commande (39) maintiennent les griffes (36) dans leur position déployée.

9. Raccord rapide selon la revendication 8, **caractérisé en ce que** les billes de commande (39) prennent appui sur une rampe (239) du porte-billes (23) entre un diamètre inférieur correspondant à la position rétractée des griffes (36) et un diamètre supérieur correspondant à la position déployée des griffes (36).

10. Raccord rapide selon l'une des revendications précédentes, **caractérisé en ce que** dans la quatrième configuration d'accouplement par rapprochement mutuel, la bague de purge (4) est dans la position arrière dans laquelle la bague de purge (4) obture le passage de purge (24) du corps mâle (2).

11. Raccord rapide selon l'une des revendications précédentes, **caractérisé en ce que** dans la deuxième configuration d'accouplement par rapprochement mutuel, la bague interne (29) a atteint une position dans laquelle elle s'attelle au corps de soupape (25) par les billes d'attelage (27).

12. Raccord rapide selon l'une des revendications précédentes, **caractérisé en ce que** la bague interne (29 ; 92) est rappelée vers sa position de retenue dans laquelle elle maintient attelés le corps de soupape (25 ; 90) et le corps femelle (12, 14, 16) par l'action d'un ressort de rappel (30 ; 94) lors du désaccouplement.

13. Raccord rapide selon l'une des revendications précédentes, **caractérisé en ce qu'**à la troisième configuration d'accouplement par rapprochement mutuel, les moyens de pilotage (32 ; 36) ont dépassé une collerette intérieure (46a) de la bague de purge (4).

14. Raccord rapide selon l'une des revendications précédentes, **caractérisé en ce que** les billes de verrouillage (18) et les billes d'attelage (18) sont identiques et portées par le porte-billes (90).

15. Raccord rapide selon la revendication 1, **caractérisé en ce que** l'élément femelle (B) comporte une bille de commande et de pilotage (32) prenant appui sur une rampe du porte-billes (23) entre un diamètre supérieur pour lequel la bille (32) fait saillie du corps femelle (12, 14, 16) et interfère avec la collerette intérieure (46a) de la bague de purge (4), et un diamètre supérieur pour lequel la bille de pilotage et de commande (32) ne fait pas saillie du corps femelle (12, 14, 16).

## Patentansprüche

1. Schnellkupplung (R) für die dichte Verbindung von Fluidleitungen (C1, C2), die ein Einsteckelement (A), das geeignet ist, an eine erste Leitung (C1) angeschlossen zu werden, und ein Aufnahmeelement (B), das geeignet ist, an eine zweite Leitung (C2) angeschlossen zu werden, umfasst, wobei das Einsteckelement (B) aufweist:
- einen Einsteckkörper (2), der mit einem Verriegelungsrelief (22) versehen ist und einen Innenkanal (200) in Verbindung mit der ersten Leitung (C1) begrenzt,
- eine Hülse (4) des Spülens der ersten Leitung (C1), die den Einsteckkörper (2) umgibt und zwischen einer rückwärtigen Position, in der die Spülhülse (4) einen Spüldurchgang (24) des Einsteckkörpers (2) verschließt, und einer vorderen Position, in der die Spülhülse (4) nicht mehr den Spüldurchgang (24) verschließt, beweglich ist,
wobei das Aufnahmeelement (B) aufweist:
- einen Aufnahmekörper (12, 14, 16), der einen Innenkanal (120) in Verbindung mit der zweiten Leitung (C2) begrenzt,
- einen Kugelträger (23; 90), der im Inneren des Aufnahmekörpers (12, 14, 16) angeordnet ist und einen Raum (232) der Aufnahme des Einsteckkörpers (2) bildet und Verriegelungskugeln (18) für den Einsteckkörper (2) trägt, wobei die Verriegelungskugeln (18) in einer Aufnahme (230) zwischen einer ersten Position, in der sie in der Lage sind, sich einem Zurückziehen des Verriegelungsreliefs (22) entgegenzustellen, und einer zweiten Position, in der die Verriegelungskugeln (18) das Zurückziehen des Verriegelungsreliefs (22) ermöglichen,
- einen Ventilkörper (25; 90), der mit dem Kugelträger (23; 90) verbunden ist und in Längsrichtung in dem Aufnahmekörper (12, 14, 16) zwischen einer vorderen Position, in der er den Fluiddurchgang zu der zweiten Leitung (C2) verschließt, und einer rückwärtigen Position, in der der Durchgang zu der zweiten Leitung (C2) offen ist, beweglich ist, wobei der Ventilkörper (25; 90) Kupplungskugeln (27; 18) aufweist, die geeignet sind, den Ventilkörper (25) und den Aufnahmekörper (12, 14, 16) in Längsrichtung zu verbinden,
- eine Innenhülse (29; 92), die im Inneren des Ventilkörpers (25; 90) angeordnet ist und geeignet ist, in einer Halteposition den Ventilkörper (25; 90) und den Aufnahmekörper (12, 14, 16), die durch die Kupplungskugeln (27; 18) gekoppelt sind, zu halten, wenn das Aufnahmeelement (B) von dem Einsteckelement (A) entkuppelt ist,
wobei die Kupplung (R) **dadurch gekennzeichnet ist, dass**:
- in einer ersten Kupplungskonfiguration durch wechselseitiges Annähern des Einsteckkörpers (A) und des Aufnahmekörpers (B) die Verriegelungskugeln (18) das Verriegelungsrelief (22) des Einsteckelementes (A) überschritten haben,
- in einer zweiten Kupplungskonfiguration durch wechselseitiges Annähern die Innenhülse (29; 92) eine Position erreicht hat, in der sie nicht mehr den Ventilkörper (25; 90) und den Aufnahmekörper (12, 14, 16) hält, die durch die Kupplungskugeln (27; 18) gekoppelt sind,
- in einer dritten Kupplungskonfiguration durch wechselseitiges Annähern der Aufnahmekörper (12, 14, 16) die Verriegelungskugeln (18) in ihrer ersten Position hält;
- in einer vierten Kupplungskonfiguration durch wechselseitiges Annähern der Ventilkörper (25; 90) eine Position erreicht hat, die den Fluiddurch zwischen den 2 Leitungen (C1, C2) gestattet,
- das Aufnahmeelement (B) Steuermittel (32; 36) aufweist, die geeignet sind, die Spülhülse (4) von ihrer rückwärtigen Position in ihre vordere Position bei dem Entkuppeln des Einsteckelementes (A) und des Aufnahmeelementes (B) durch wechselseitiges Entfernen mitzunehmen.

2. Schnellkupplung nach Anspruch 1, **dadurch gekennzeichnet, dass** die Steuermittel (32; 36) selektiv derart deaktivierbar sind, dass sie nicht die Spülhülse (4) bei dem Entkuppeln mitnehmen.

3. Schnellkupplung nach Anspruch 2, **dadurch gekennzeichnet, dass** das Aufnahmeelement (B) eine Auswahlhülse (17) umfasst, die die Deaktivierung der Steuermittel (32; 36) ermöglicht und um den Aufnahmekörper (12, 14, 60) herum montiert ist und drehbeweglich zwischen einer ersten Position ist, in der sie die Steuermittel (32; 36) in einer Position hält, in der sie nicht die Spülhülse (4) bei dem Entkuppeln des Einsteckelementes (A) und Aufnahmeelementes (B) mitnehmen können, und einer zweiten Position, in der die Steuermittel (32; 36) geeignet sind, die Spülhülse (4) von ihrer rückwärtigen Position in ihre vordere Position bei dem Entkuppeln mitzunehmen.

4. Schnellkupplung nach einem der vorhergehenden Ansprüche, **dadurch gekennzeichnet, dass** die Steuermittel Steuerkugeln (32) sind, die in dem Aufnahmekörper (16) lagern und zwischen einer ersten Position, in der die Steuerkugeln (32) aus dem Aufnahmekörper (16) herausragen und mit der Spülhülse (4) in Eingriff sind, und einer zweiten Position, in der die Steuerkugeln (32) nicht aus dem Aufnahmekörper (16) herausragen, beweglich sind.

5. Schnellkupplung nach Anspruch 4, **dadurch gekennzeichnet, dass** das Aufnahmeelement (B) Steuerfinger (34) für die Steuerkugeln (32) aufweist, die zwischen einer ersten Position, in der die Steuerkugeln (32 radial zu ihrer ersten Position beabstandet sind, und einer zweiten Position, in der die Steuerkugeln (32) radial mit einer Ausnehmung (340) der Steuerfinger (34) ausgerichtet sind und frei sind, ihre zweiten Position zu erreichen, beweglich sind.

6. Schnellkupplung nach Anspruch 5, **dadurch gekennzeichnet, dass** die Steuerfinger (34) der Steuerkugeln (32) in ihrer zweiten Position durch den Kugelträger (23; 90) gegen die Kraft einer Feder (35) in der ersten und zweiten Kupplungskonfiguration gehalten sind und in ihrer zweiten Position durch den Aufnahmekörper (14) in der dritten und vierten Kupplungskonfiguration gehalten sind.

7. Schnellkupplung nach einem der Ansprüche 1 bis 3, **dadurch gekennzeichnet, dass** die Steuermittel Krallen (36) sind, die zwischen einer ausgefahrenen Position, in der sie aus dem Aufnahmekörper (16) herausragen und mit der Spülhülse (4) im Eingriff sind, und einer zurückgezogenen Position, in der die Krallen (36) nicht mit der Spülhülse (4) im Eingriff sind, beweglich sind.

8. Schnellkupplung nach Anspruch 7, **dadurch gekennzeichnet, dass** das Aufnahmeelement (B) Ansteuerkugeln (39) für die Krallen (36) aufweist, die zwischen einer abgesenkten Position, in der die Krallen (36) frei sind, ihre zurückgezogene Position in zentripetaler Weise zu erreichen, und einer angehobenen Position, in der die Ansteuerkugeln (39) die Krallen (36) in ihrer ausgefahrenen Position halten, beweglich sind.

9. Schnellkupplung nach Anspruch 8, **dadurch gekennzeichnet, dass** die Ansteuerkugeln (39) sich auf einer Rampe (239) des Kugelträgers (23) zwischen einem kleineren Durchmesser, der der zurückgezogenen Position der Krallen (36) entspricht, und einem größeren Durchmesser, der der ausgefahrenen Position der Krallen (36) entspricht, abstützen.

10. Schnellkupplung nach einem der vorhergehenden Ansprüche, **dadurch gekennzeichnet, dass** in der vierten Kupplungskonfiguration und durch wechselseitiges Annähern die Spülhülse (4) in der hinteren Position ist, in der die Spülhülse (4) den Spüldurchgang (24) des Einsteckkörpers (2) verschließt.

11. Schnellkupplung nach einem der vorhergehenden Ansprüche, **dadurch gekennzeichnet, dass** in der zweiten Kupplungskonfiguration durch wechselseitiges Annähern die Innenhülse (29) eine Position erreicht hat, in der sie mit dem Ventilkörpers (25) durch die Kupplungskugeln (27) gekoppelt ist.

12. Schnellkupplung nach einem der vorhergehenden Ansprüche, **dadurch gekennzeichnet, dass** die Innenhülse (29; 92) in ihre Halteposition vorgespannt ist, in der sie den Ventilkörpers (25; 90) und den Aufnahmekörper (12, 14, 16) durch die Wirkung einer Rückstellfeder (30; 94) bei dem Entkuppeln hält.

13. Schnellkupplung nach einem der vorhergehenden Ansprüche, **dadurch gekennzeichnet, dass** in der dritten Kupplungskonfiguration durch wechselseitiges Annähern die Steuermittel (32; 36) einen inneren Kragen (46a) der Spülhülse (4) überragen.

14. Schnellkupplung nach einem der vorhergehenden Ansprüche, **dadurch gekennzeichnet, dass** die Verriegelungskugeln (18) und die Kupplungskugeln (18) identisch sind und von dem Kugelträger (90) getragen werden.

15. Schnellkupplung nach Anspruch 1, **dadurch gekennzeichnet, dass** das Aufnahmeelement (B) eine Ansteuer- und Steuerkugel (32), die sich auf einer Rampe des Kugelträgers (23) zwischen einem höheren Durchmesser, für den die Kugel (32) aus dem Aufnahmekörper (12, 14, 16) herausragt und mit dem inneren Kragen (46a) der Spülhülse (4) im Eingriff ist, und einem höheren Durchmesser, für den die Ansteuer- und Steuerkugel (32) nicht aus dem Aufnahme Körper (12, 14, 16) herausragt, abstützt.

## Claims

1. A quick coupling (R) for sealably joining fluid conduits (C1, C2), including a male element (A) suitable for being connected to a first conduit (C1) and a female element (B) suitable for being connected to a second conduit (C2), the male element (B) including:
- a male body (2) provided with a locking relief (22) and defining an inner channel (200) in communication with the first conduit (C1),
- a purging ring (4) of the first conduit (C1), surrounding the male body (2), and movable between a rear position, in which the purging ring (4) closes off a purging passage (24) of the male body (2), and a forward position, in which the purging ring (4) no longer closes off the purging passage (24),
the female element (B) including:
- a female body (12, 14, 16) defining an inner channel (120) in communication with the second conduit (C2),
- a ball-retainer (23; 90) arranged inside the female body (12, 14, 16), forming a receiving housing (232) of the male body (2) and bearing locking balls (18) of the male body (2), said locking balls (18) being movable in a housing (230) between a first position, in which they are able to oppose the removal of the locking relief (22), and a second position, in which the locking balls (18) allow the removal of the locking relief (22),
- a valve body (25; 90) secured to the ball-retainer (23; 90), translatable in the female body (12, 14, 16) between a forward position, in which it closes off the fluid passage toward the second conduit (C2), and a rear position, in which the passage toward the second conduit (C2) is open, the valve body (25; 90) including coupling balls (27; 18) suitable for securing the valve body (25) and the female body (12, 14, 16) in translation,
- an inner ring (29; 92) arranged inside the valve body (25; 90), suitable, in a retaining position, for keeping the valve body (25; 90) and the female body (12, 14, 16) coupled by the coupling balls (27; 18) when the female element (B) is uncoupled from the male element (A),
the coupling (R) being **characterized in that**:
- in a first coupling configuration by bringing the male element (A) and the female element (B) closer together, the locking balls (18) have crossed the locking relief (22) of the male element (A),
- in a second coupling configuration by coming closer together, the inner ring (29; 92) has reached a position in which it no longer keeps the valve body (25; 90) and the female body (12, 14, 16) coupled by the coupling balls (27; 18),
- in a third coupling configuration by coming closer together, the female body (12, 14, 16) keeps the locking balls (18) in their first position,
- in a fourth coupling configuration by coming closer together, the valve body (25; 90) has reached a position that allows fluid to pass between the two conduits (C1, C2),
- the female element (B) includes steering means (32; 36) able to drive the purging ring (4) from its rear position toward its forward position during the uncoupling of the male (A) and female (B) elements by moving away from one another.

2. The quick coupling according to claim 1, **characterized in that** the steering means (32; 36) can be selectively deactivated such that they do not drive the purging ring (4) during uncoupling.

3. The quick coupling according to claim 2, **characterized in that** the female element (B) comprises a selector ring (17) allowing the deactivation of the steering means (32; 36), mounted around the female body (12, 14, 16) and rotatable between a first position, in which it keeps the steering means (32; 36) in a position in which they cannot drive the purging ring (4) during uncoupling of the male (A) and female (B) elements, and a second position, in which the steering means (32; 36) are able to drive the purging ring (4) from its rear position toward its forward position during the uncoupling.

4. The quick coupling according to one of the preceding claims, **characterized in that** the steering means are steering balls (32) housed in the female body (16) and movable between a first position, in which the steering balls (32) protrude from the female body (16) and interfere with the purging ring (4), and a second position, in which the steering balls (32) do not protrude from the female body (16).

5. The quick coupling according to claim 4, **characterized in that** the female element (B) includes control fingers (34) of the steering balls (32), movable between a first position, in which the steering balls (32) are moved radially away from their first position, and a second position, in which the steering balls (32) are radially aligned with a notch (340) of the control fingers (34) and are free to reach their second position.

6. The quick coupling according to claim 5, **characterized in that** the control fingers (34) of the steering balls (32) are kept in their second position by the ball-retainer (23; 90) against a force of a spring (35) in the first and second coupling configurations, and are kept in their first position by the female body (14) in the third and fourth coupling configurations.

7. The quick coupling according to one of claims 1 to 3, **characterized in that** the steering means are claws (36) movable between a deployed position, in which they protrude from the female body (16) and interfere with the purging ring (4), and a retracted position, in which the claws (36) do not interfere with the purging ring (4).

8. The quick coupling according to claim 7, **characterized in that** the female element (B) includes control balls (39) of the claws (36), movable between a low position, in which the claws (36) are free to reach their retracted position centripetally, and a high position, in which the control balls (39) keep the claws (36) in their deployed position.

9. The quick coupling according to claim 8, **characterized in that** the control balls (39) bear on a ramp (239) of the ball-retainer (23) between a lower diameter corresponding to the retracted position of the claws (36) and an upper diameter corresponding to the deployed position of the claws (36).

10. The quick coupling according to one of the preceding claims, **characterized in that** in the fourth coupling configuration by coming closer together, the purging ring (4) is in the rear position, in which the purging ring (4) closes off a purging passage (24) of the male body (2).

11. The quick coupling according to one of the preceding claims, **characterized in that** in the second coupling configuration by coming closer together, the inner ring (29) has reached a position in which it couples itself to the valve body (25) via the coupling balls (27).

12. The quick coupling according to any one of the preceding claims, **characterized in that** the inner ring (29; 92) is returned toward its retained position in which it keeps the valve body (25; 90) and the female body (12, 14, 16) coupled by the action of a return spring (30; 94) during the uncoupling.

13. The quick coupling according to one of the preceding claims, **characterized in that** in the third coupling configuration by coming closer together, the steering means (32; 36) have passed an inner collar (46a) of the purging ring (4).

14. The quick coupling according to one of the preceding claims, **characterized in that** the locking balls (18) and the coupling balls (18) are identical and supported by the ball-retainer (90).

15. The quick coupling according to claim 1, **characterized in that** the female element (B) includes a control and steering ball (32) bearing on a ramp of the ball-retainer (23) between an upper diameter for which the ball (32) protrudes from the female body (12, 14, 16) and interferes with the inner collar (46a) of the purging ring (4), and an upper diameter for which the steering and control ball (32) does not protrude from the female body (12, 14, 16).
